Europäisches Patentamt

European Patent Office

Office européen des brevets

(11) Numéro de publication: **0 539 554 B1**

# (12) FASCICULE DE BREVET EUROPEEN

(45) Date de publication de fascicule du brevet: **05.07.95** (51) Int. Cl.6: **B01D 33/19**

(21) Numéro de dépôt: **92909924.0**

(22) Date de dépôt: **15.05.92**

(86) Numéro de dépôt internationale :
**PCT/BE92/00018**

(87) Numéro de publication internationale :
**WO 92/20426 (26.11.92 92/29)**

(54) **DISPOSITIF DE FILTRATION CONTINU.**

(30) Priorité: **15.05.91 BE 9100450**

(43) Date de publication de la demande:
**05.05.93 Bulletin 93/18**

(45) Mention de la délivrance du brevet:
**05.07.95 Bulletin 95/27**

(84) Etats contractants désignés:
**BE DE ES FR GB IT NL**

(56) Documents cités:
**US-A- 3 389 800**
**US-A- 4 721 566**

(73) Titulaire: **PROCESS FILTRATION AND LIOUID EOUIPMENT**
**Rue Joseph-Wauters 101**
**B-4480 Engis (BE)**

(72) Inventeur: **KUROWSKI, Serge**
**Rue des Mésanges 5**
**B-4121 Neuville-en-Condroz (BE)**

(74) Mandataire: **Claeys, Pierre**
**GEVERS Patents,**
**Brussels Airport Business Park,**
**Holidaystraat 5**
**B-1831 Diegem (BE)**

Il est rappelé que: Dans un délai de neuf mois à compter de la date de publication de la mention de la délivrance du brevet européen, toute personne peut faire opposition au brevet européen délivré, auprès de l'Office européen des brevets. L'opposition doit être formée par écrit et motivée. Elle n'est réputée formée qu'après paiement de la taxe d'opposition (art. 99(1) Convention sur le brevet européen).

Rank Xerox (UK) Business Services
(3.10/3.09/3.3.3)

## Description

La présente invention est relative à un dispositif de filtration continu, comprenant

- des cellules filtrantes en forme de cuve présentant chacune une ouverture qui est disposée vers le haut pendant la filtration et qui est garnie d'un lit filtrant, ces cellules étant disposées en carrousel autour d'un axe de rotation vertical et présentant chacune un axe de basculement horizontal qui croise l'axe de rotation du carrousel,
- un levier relié de manière fixe à chaque cellule filtrante de manière a croiser leur axe de basculement en un point de basculement,
- des éléments suiveurs portés par le levier et disposés sur lui de part et d'autre du point de basculement,
- au moins un élément de guidage stationnaire pour chacun des éléments suiveurs du levier d'une cellule, ces éléments de guidage étant disposés l'un par rapport à l'autre dans une zone du carrousel de manière à obtenir un renversement de chaque cellule dans cette zone autour de son axe de basculement,
- au moins un logement prévu dans un premier des éléments de guidage pour l'élément suiveur correspondant, ce logement étant disposé de manière à permettre un pivotement du levier autour de l'élément suiveur en position dans ce logement,
- au moins une zone d'effort qui est prévue sur un deuxième élément de guidage et sur laquelle agit son élément suiveur correspondant lorsque l'élément suiveur correspondant au premier élément de guidage sort de son logement ou respectivement pénètre dans celui-ci, et

des moyens d'entraînement en rotation (5, 6) des cellules de filtrage autour de l'axe de rotation (2) susdit.

On connaît depuis longtemps déjà des dispositifs de ce genre, utilisés sur des filtres, appelés Bird-Prayon, et mis sur le marché par les firmes Bird Machine, Prayon et Process Filtration and Liquid Equipment.

De tels filtres sont utilisés notamment dans des installations industrielles de production d'acide phosphorique. Ils permettent d'une manière idéale une séparation solide - liquide par filtration sous vide et lavage d'un gâteau formé dans les cellules, puis un renversement des cellules pour en décharger le gâteau de filtration.

Au cours de ce renversement, les rails de guidage sont, en des emplacements particuliers, soumis à des efforts importants qui peuvent provoquer des chocs et des vibrations et entraînent une usure rapide des pièces en mouvement. Ces efforts ont lieu en particulier au moment où le galet arrière du levier de pivotement d'une cellule entre en contact avec son rail de guidage, lors du renversement de celle-ci, ou encore lorsque le galet avant entre en contact avec son rail de guidage pour permettre le retour de la cellule dans sa position horizontale.

Les risques de chocs, vibrations et usure prématurée des pièces en mouvement ont pour effet de limiter la vitesse de rotation du filtre. Or, comme la capacité de filtration d'une installation est proportionnelle à la racine carrée de la vitesse de rotation du filtre, celle-ci se trouve donc également limitée.

Un dispositif de filtration continu sur carrousel, présentant une étape de renversement des cuves guidées par des rails de guidage à l'aide d'un levier de pivotement muni à ses deux extrémités de galets, est décrit dans le brevet US-A-4721566. Les galets et les rails de guidage sont ici aussi soumis aux efforts décrits.

On connaît enfin également un dispositif du même genre qui est décrit dans le brevet US-A-3389800. Dans ce dispositif, on a prévu un basculement des cellules vers l'avant dans le sens de rotation du carrousel, c'est-à-dire vers la cellule voisine en cours de nettoyage. Depuis longtemps déjà, on prévoit plutôt un basculement des cellules vers l'arrière, c'est-à-dire vers la cellule voisine qui doit encore être nettoyée. Le levier en forme de V à bras de petite dimension, tel que prévu dans ce brevet US-A-3389800, s'il convient pour le basculement de petites cellules, n'est plus adapté aux grands poids et dimensions des cellules des installations actuelles.

La présente invention a pour but de réaliser un dispositif de filtration continu dans lequel on réduit ou surmonte les inconvénients cités ci-dessus. Avantageusement, les moyens prévus pour résoudre le problème posé pourront être appliqués à des installations connues avec un coût d'appareillage aussi faible que possible.

Pour résoudre ces problèmes, on a prévu, suivant l'invention, un dispositif tel que décrit au début, et comprenant en outre

- un premier levier supplémentaire relié de manière fixe à chaque cellule filtrante, sur ou à proximité de leur axe de basculement,
- une première butée déplaçable, et
- un élément élastique reliant la première butée à un support stationnaire et agissant sur la première butée dans un premier sens,
- le premier levier supplémentaire coopérant avec la première butée en agissant sur elle dans des sens toujours approximativement opposés au premier sens susdit, pendant que l'élément suiveur correspondant au deuxième élément de guidage agit sur ladite zone d'effort correspondante. L'équilibrage du poids de la cellule et des efforts d'inertie qu'elle engendre à la fin de son renversement n'est ainsi plus effectué uniquement par le galet suiveur, par exemple le galet suiveur arrière dans le sens de rotation du carrousel, sur son rail de guidage. Le premier levier supplémentaire cité, en agissant sur une butée mobile rappelée élastiquement, contribue à cet équilibrage et l'effort subi par le rail de guidage en est donc diminué.

Dans un dispositif suivant l'invention, dans lequel au moins un logement est prévu dans le deuxième élément de guidage pour l'élément suiveur correspondant, ce logement étant disposé de manière à permettre un pivotement du levier autour de l'élément suiveur en position dans ce logement, au moins une zone d'effort étant prévue sur le premier élément de guidage, zone sur laquelle agit son élément suiveur correspondant lorsque l'élément suiveur correspondant au deuxième élément de guidage pénètre dans son logement ou respectivement en sort, on peut prévoir qu'il comprenne en outre

- un deuxième levier supplémentaire relié de manière fixe à chaque cellule filtrante, sur ou à proximité de leur axe de basculement,
- une deuxième butée déplaçable, et
- un élément élastique reliant la deuxième butée a un support stationnaire et agissant sur la deuxième butée dans un deuxième sens,
- le deuxième levier supplémentaire coopérant avec la deuxième butée en agissant sur elle dans des sens toujours approximativement opposés au deuxième sens susdit, pendant que l'élément suiveur correspondant au premier élément de guidage agit sur ladite zone d'effort correspondante.

L'équilibrage du poids de la cellule et de l'effort d'inertie qu'elle engendre au début du retour de la cellule depuis sa position renversée vers sa position horizontale n'est plus ici effectué uniquement par le galet suiveur, par exemple le galet suiveur avant, sur son rail de guidage. Le deuxième levier supplémentaire contribue ici aussi à cet équilibrage en diminuant l'effort subi par le rail de guidage.

Suivant une forme de réalisation avantageuse de l'invention, les premier et deuxième leviers supplémentaires sont disposés de part et d'autre par rapport à l'axe de basculement. De préférence, ils sont réalisés de manière à former ensemble une pièce unique.

Suivant une forme préférée de réalisation de l'invention, le levier et les leviers supplémentaires sont, dans une vue en projection horizontale, disposés sensiblement en croix autour de l'axe de basculement.

Suivant une forme particulière de réalisation de l'invention, chaque butée est formée d'un galet cylindrique capable de pivoter autour d'un axe parallèle à l'axe de basculement. Avantageusement, suivant l'invention, chaque levier supplémentaire présente une surface d'appui courbe pour coopérer avec son galet de butée et le galet et la surface d'appui sont mutuellement agencés de telle façon que le levier supplémentaire pivote approximativement autour du point de tangeance entre la surface d'appui et le galet pendant leur coopération. Dans cette forme préférée de réalisation, l'action du levier est presque ponctuelle sur la surface cylindrique du galet et la déviation du sens de cette action par rapport au sens d'action de l'élément élastique, pendant toute la durée du contact entre le galet de butée et le levier supplémentaire, va être minime.

Suivant une autre forme de réalisation de l'invention chaque élément élastique est précontraint.

D'autres détails et particularités de l'invention ressortiront de la description donnée ci-après, à titre non limitatif et avec référence aux dessins annexés.

La figure 1 représente d'une manière schématique un dispositif de filtration continu.

La figure 2 représente le guidage des cellules pendant leur renversement dans un dispositif connu.

La figure 3 représente le guidage des cellules pendant leur renversement dans un dispositif suivant l'invention.

Les figures 4a et 4b représentent, à l'échelle agrandie, la décomposition des forces à l'endroit d'une forte sollicitation des rails de guidage dans le dispositif selon les figures 2 et respectivement 3.

La figure 5 représente une forme de réalisation de butée et de levier supplémentaire.

Sur les différents dessins, les éléments identiques ou analogues portent les mêmes références.

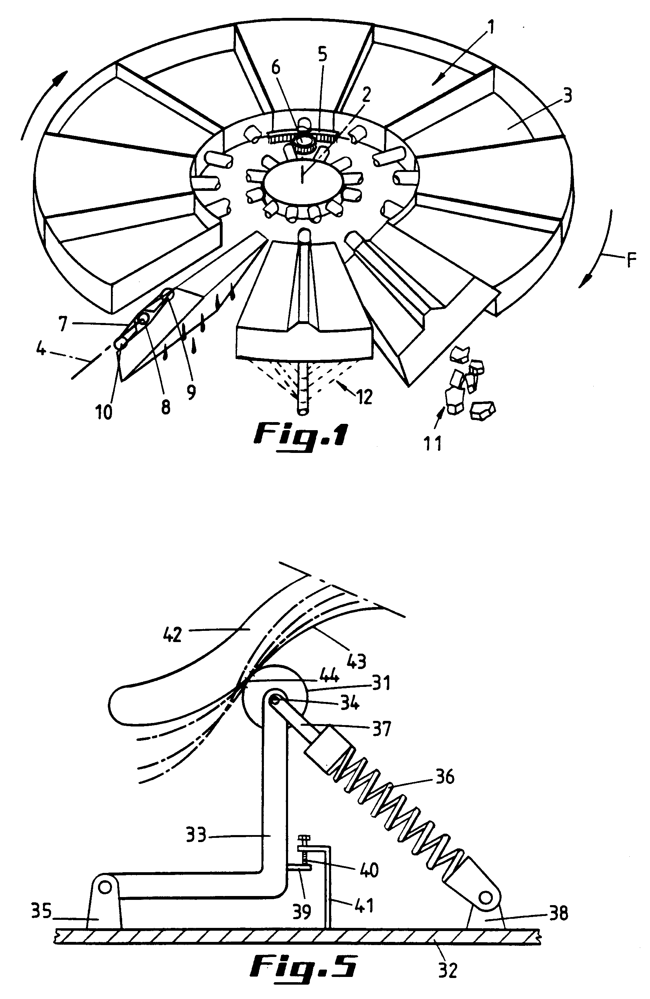

Sur la figure 1, on a représenté de manière schématique un dispositif de filtration continu, courant, tel qu'utilisé par exemple pour la filtration d'acide phosphorique.

Dans l'exemple de réalisation représenté sur la figure 1, des cellules filtrante 1 en forme de cuve, présentant une ouverture disposée vers le haut pendant le filtrage, sont disposées en carrousel autour d'un axe de rotation vertical 2. Ces cellules 1 sont garnies d'un lit filtrant 3 horizontal en dessous duquel le liquide de filtration est recueilli. Chaque cellule 1 présente aussi chacune un axe de basculement 4 horizontal qui croise l'axe de rotation 2 du carrousel.

Dans l'exemple de réalisation illustré sur la figure 1, la rotation du filtre est assurée par une crémaillère 5 partiellement représentée, qui est entraînée en rotation dans le sens F autour de l'axe 2 par une roue dentée 6.

Chacune des cellules 1 est aussi munie d'un levier de pivotement 7, dont un seul a été représenté sur la figure 1. Ce levier est relié de manière fixe à la cellule filtrante de manière à croiser leur axe de basculement en un point de basculement 8. Chaque extrémité du levier de pivotement est munie d'un élément suiveur, dans le cas illustré un galet avant 9 et un galet arrière 10, lorsqu'on considère le sens de rotation F et la position horizontale de filtration des cellules.

Ainsi qu'il ressort de la figure 1, les trois cellules filtrantes représentées en bas sur ce dessin ont cessé de filtrer et elles subissent un basculement en arrière autour de leur axe 4 pour permettre une décharge du gâteau de filtration 11 et un lavage 12 du lit filtrant.

Le fonctionnement d'un dispositif de ce genre est décrit en détail notamment dans les brevets US précités, mais aussi par exemple dans les brevets BE-A-768591 et BE-A-847088.

Le basculement des cellules filtrantes est obtenu par un guidage des galets suiveurs 9 et 10 dans des éléments de guidage stationnaires, disposés par exemple à l'extérieur du carrousel là où passe le levier de pivotement 7 des cellules. On peut par exemple prévoir pour le dispositif illustré sur la figure 1, en face des trois cellulles en position de basculement, deux éléments de guidage 13 et 14, tels que représentés sur la figure 2.

Ainsi qu'il ressort de cette dernière figure, les éléments de guidage 13 et 14 sont formés chacun de plusieurs sections incurvées de rail de guidage que suivent les galets avant 9 et respectivement arrière 10. Au cours de sa progression suivant le sens de la flèche F, l'axe de basculement horizontal 4 de la cellule et donc du levier 7, qui croise cet axe en le point de basculement 8, suit une trajectoire horizontale désignée par la référence 15 et représentée en traits mixtes.

Le galet suiveur avant 9 rencontre pendant sa progression un logement 16 entre deux sections du rail 13 disposées verticalement. Une fois que le galet avant 9 a pénétré dans le logement, la cellule et le galet arrière 10 peuvent basculer dans le sens contraire aux aiguilles d'une montre sur la figure 2. A la fin du basculement, le galet arrière 10 est reçu en 17 sur une section du rail de guidage 14. Un effort important apparaît entre ce galet et cette section de rail pendant la sortie du galet avant 9 hors de son logement 16.

Plus loin vers la droite sur la figure 2, le galet suiveur arrière 10 doit pénétrer dans un logement 18 prévu entre deux sections du rail 14 disposées verticalement. Pendant cette pénétration, le galet avant 9 est en appui en 19 sur une section du rail de guidage 13, où apparaît un effort important entre ce galet et cette section de rail.

Une fois que le galet arrière 10 a pénétré dans son logement, un basculement de la cellule et du galet avant se produit de manière à retourner la cellule filtrante dans sa position initiale.

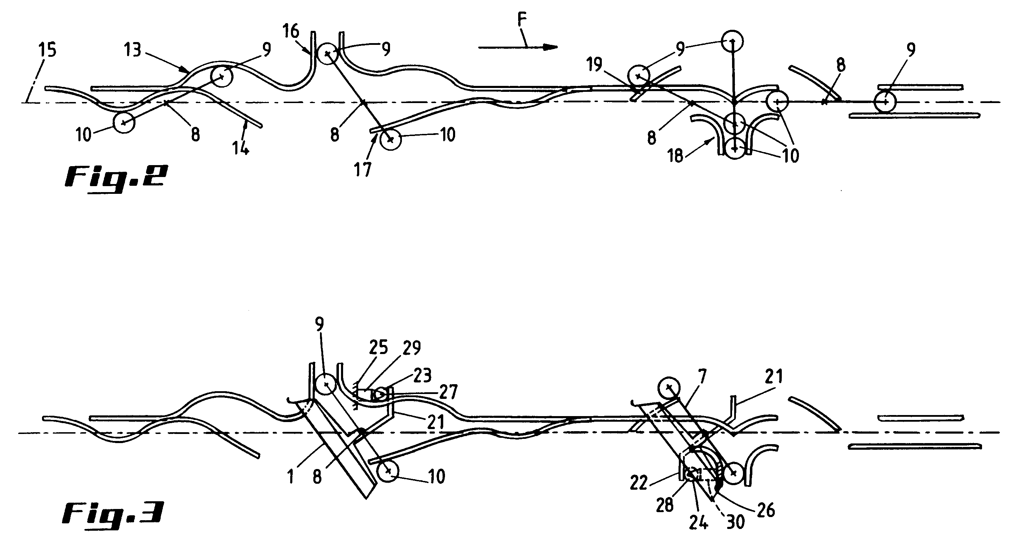

La figure 4a représente, à l'échelle agrandie, l'emplacement 17 du rail 14 et le logement 16 du rail 13, au moment de la sollicitation la plus prononcée du rail 14. La cellule 1 est représentée à cet endroit de manière schématique. En dehors dudit point de basculement 8 de la cellule 1, il faut noter le centre de gravité 20 de celle-ci. A l'emplacement 17, le galet suiveur 10 doit équilibrer l'effort imprimé par le poids et la force d'inertie de la cellule due au basculement et à la rencontre du rail 14, et cela selon l'équation (1) suivante :

$$P. x = R. D_1 \qquad (1)$$

P = poids de la cellule + effort d'inertie.

x = distance projetée verticalement de la distance entre le point de basculement 8 et le centre de gravité 20 de la cellule.

R = action du galet suiveur 10 sur l'emplacement 17 du rail 14 (R est la résultante de $F_1$, c'est-à-dire l'effort perpendiculaire au rail, et de $F_2$, l'effort dans l'axe du levier de pivotement 7).

$D_1$ = distance entre le centre du galet suiveur arrière 10 et le point de basculement 8 de la cellule 1.

Sur la figure 4a, la référence $D_2$ représente la distance entre le centre de galet suiveur avant 9 et le point de basculement 8 de la cellule 1.

Il faut remarquer qu'en plus du fait que l'action R du galet 10 sur le rail 14 est importante à l'emplacement 17, elle est orientée de façon défavorable par rapport à l'inclinaison du rail 14 à cet endroit.

On a représenté, à titre d'exemple, sur la figure 3 une forme de réalisation schématique d'un dispositif suivant l'invention, circulant dans des rails de guidage existants, tels que ceux représentés sur la figure 2.

Le dispositif suivant l'invention illustré comprend en outre un levier supplémentaire 21 relié de manière fixe à chaque cellule filtrante 1, sur ou a proximité de l'axe de basculement 4. On peut aussi prévoir un deuxième levier supplémentaire 22 lui aussi relié de manière fixe à chaque cellule de filtrage (voir partie de droite de la figure 3). Dans ce dernier cas, le premier et le deuxième leviers supplémentaires 21 et 22 peuvent être disposés de part et d'autre par rapport à l'axe de basculement 4, par exemple en formant une pièce unique dont ils sont les deux bras de levier.

Dans l'exemple de réalisation illustré à droite sur la figure 3, le levier 7 et les leviers supplémentaires 21 et 22 sont disposés, dans une vue en projection horizontale, en croix autour de l'axe de basculement.

Dans cet exemple de réalisation, les leviers supplémentaires 21 et 22 ont une forme légèrement coudée. Au moment où un galet suiveur 9 ou respectivement 10 sollicite violemment un des rails de guidage 13 ou 14, un des leviers supplémentaires 21 ou 22 entre en contact avec une butée déplaçable 23 ou 24.

Dans l'exemple de réalisation illustré sur la figure 3, cette butée est réalisée sous la forme d'un galet de butée capable de pivoter librement autour de son axe 27 ou 28 et relié à un support stationnaire 25 ou 26, représenté uniquement de manière schématique, par un élément élastique. Les axes de pivotement 27 ou 28 des galets de butée sont parallèles à l'axe de basculement 4 des cellules au moment où les galets de butée agissent.

Selon l'exemple de réalisation illustré, l'élément élastique reliant le galet de butée à son support stationnaire est un ressort de compression 29 ou 30 qui agit sur le galet de butée de manière à l'écarter de son support stationnaire et qui permet donc un déplacement du galet de butée vers son support, lorsqu'il est sollicité.

Le levier supplémentaire 21 ou 22 et la butée correspondante 23 ou 24 sont agencés l'un par rapport à l'autre de façon que, lors de leur contact, le levier supplémentaire agisse dans un sens opposé ou presque opposé au sens d'action f du ressort 29 ou 30.

Sur la figure 4b, on a représenté l'emplacement 17 du rail 14 du dispositif suivant l'invention d'une manière analogue à la figure 4a.

L'équilibrage des forces répond ici à l'équation (2) suivante :

$$P . x = RD_1 + F_3 D_3 \qquad (2)$$

P, x, R et $D_1$ ont la même signification que celle donnée précédemment.

$F_3$ = action du galet de butée 23, sur le ressort de compression 29, depuis son axe de pivotement 27, lorsque le levier supplémentaire 21 prend appui sur lui.

$D_3$ = distance projetée horizontalement de la distance entre le point de basculement 8 de la cellule 1 et la direction de la force $F_3$ agissant perpendiculairement au levier 21 à son point de contact avec le galet de butée 23.

Comme les valeurs de P, x et $D_1$ sont invariables, il ressort clairement que la valeur de R a été notablement diminuée dans l'équation (2) par rapport a l'équation (1) précédente. Il s'ensuit que le rail de guidage 14 subit un moins grand effort, en son emplacement 17, et que les risques de chocs et de vibrations lors du retournement des cellules en sont notablement réduits. Cela permet d'augmenter la vitesse de rotation du filtre, et donc la capacité de filtration de celui-ci.

Ce qui vient d'être décrit pour le levier 21 et le galet de butée 23, est également valable pour le levier 22 et le galet de butée 24.

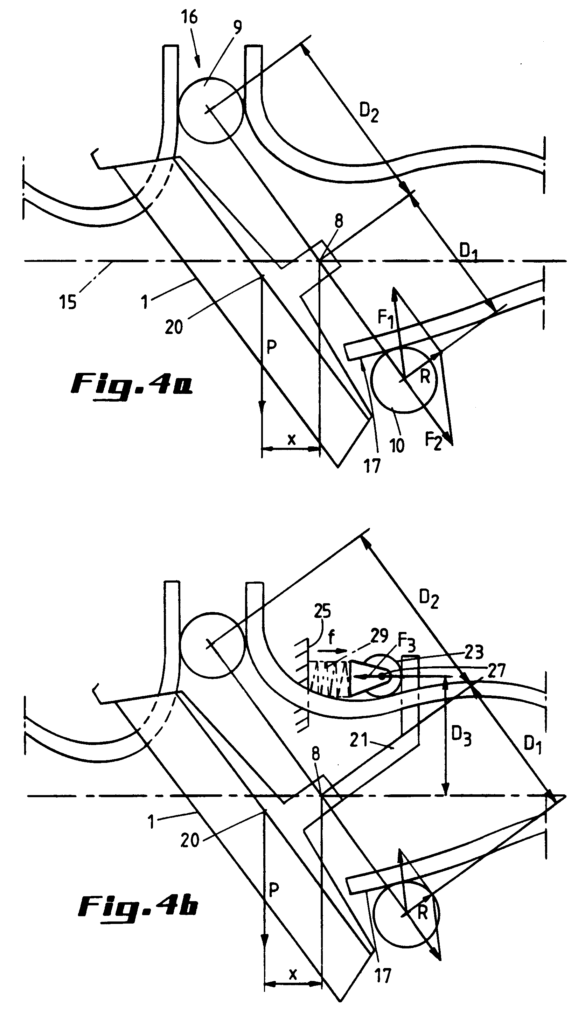

Sur la figure 5, on a représenté de manière plus détaillée un exemple de réalisation de butée déplaçable à prévoir dans un dispositif suivant l'invention.

Ici, le galet de butée 31 est relié au support stationnaire 32 par l'intermédiaire d'une pièce coudée 33. La galet 31 est agencé de manière à pouvoir pivoter autour de son axe 34 à une extrémité de la pièce coudée 33, qui, à son autre extrémité, est supportée de manière articulée dans un palier 35 fixé au support.

Le ressort de compression 36 est relié, à une extrémité, à l'axe 34, par l'intermédiaire d'une fourche 37 capable de pivoter librement autour de cet axe. A son autre extrémité, le ressort est relié de manière articulée à un palier 38 supporté de manière fixe sur le support 32.

Enfin, le levier coudé 33 est muni d'une plaquette 39 fixe, disposée en saillie. Une vis de réglage 40, vissée dans un trou taraudé d'une équerre 41 fixée sur le support stationnaire 32, agit sur la plaquette 39 de façon à comprimer initialement le ressort 36. Celui-ci peut donc être précontraint, ce qui permet d'ajuster la force de l'action du galet de butée lorsqu'il entre en contact avec un levier supplémentaire, et d'assurer un renversement et un redressement idéal de chaque cellule.

Dans l'exemple de réalisation illustré sur la figure 5, le levier supplémentaire 42 présente une surface d'appui courbe 43 pour coopérer avec le galet de butée 31.

Ainsi qu'il est illustre, pendant le passage du galet suiveur sur la zone d'effort prévue sur un rail de guidage, la surface d'appui 43 et avec elle le levier 42 pivotent approximativement autour d'un même point de tangeance qui est disposé, sur le galet suiveur 31, à l'opposé du ressort de compression 36.

On obtient ainsi pendant toute la durée de l'action de la butée sur le levier supplémentaire une orientation des forces très favorable.

Il doit être entendu que la présente invention n'est en aucune façon limitée aux formes de réalisation décrites ci-dessus et que bien des modifications peuvent y être apportées sans sortir de son cadre.

On peut prévoir des butées qui ne soient pas en forme de galet rotatif, par exemple des cames fixes.

On peut aussi imaginer d'autres éléments élastiques que des ressorts de compression, et notamment des ressorts de traction, des amortisseurs pneumatiques ou hydrauliques, etc....

On peut aussi imaginer que le levier de pivotement et les deux leviers supplémentaires forment une pièce unique.

**Revendications**

1. Dispositif de filtration continu, comprenant
   - des cellules filtrante (1) en forme de cuve présentant chacune une ouverture qui est disposée vers le haut pendant la filtration et qui est garnie d'un lit filtrant (3), ces cellules étant disposées en carrousel autour d'un axe de rotation vertical (2) et présentant chacune un axe de basculement horizontal (4) qui croise l'axe de rotation du carrousel,
   - un levier (7) relié de manière fixe à chaque cellule filtrante (1) de manière à croiser leur axe de basculement (4) en un point de basculement (8),
   - des éléments suiveurs (9, 10) portés par le levier (7) et disposés sur lui de part et d'autre du point de basculement (8),
   - au moins un élément de guidage stationnaire (13, 14) pour chacun des éléments suiveurs (9, 10) du levier d'une cellule, ces éléments de guidage (13, 14) étant disposés l'un par rapport à l'autre dans une zone du carrousel de manière à obtenir un renversement de chaque cellule (1) dans cette zone autour de son axe de basculement (4),
   - au moins un logement (16, 18) prévu dans un premier des éléments de guidage (13, 14) pour l'élément suiveur (9, 10) correspondant, ce logement étant disposé de manière à permettre un pivotement du levier (7) autour de l'élément suiveur (9, 10) en position dans ce logement (16, 18),
   - au moins une zone d'effort (17, 19) qui est prévue sur un deuxième élément de guidage (13, 14) et sur laquelle agit son élément suiveur (9, 10) correspondant lorsque l'élément suiveur correspondant au premier élément de guidage sort de son logement ou respectivement pénètre dans celui-ci, et
   des moyens d'entraînement en rotation (5, 6) des cellules filtrantes autour de l'axe de rotation (2) susdit,
   caractérisé en ce qu'il comprend en outre
   - un premier levier supplémentaire (21, 22, 42) relié de manière fixe à chaque cellule filtrante (1), sur ou à proximité de leur axe de basculement (4),
   - une première butée déplaçable (23, 24, 31), et

   - un élément élastique (29, 30, 36) reliant la première butée (23, 24, 31) à un support stationnaire (25, 26, 32) et agissant sur la première butée (23, 24, 31) dans un premier sens (f),
   et en ce que le premier levier supplémentaire (21, 22, 42) coopère avec la première butée (23, 24, 31) en agissant sur elle dans des sens toujours approximativement opposés au premier sens (f) susdit, pendant que l'élément suiveur (9, 10) correspondant au deuxième élément de guidage (13, 14) agit sur ladite zone d'effort (17, 19) correspondante.

2. Dispositif suivant la revendication 1, dans lequel au moins un logement (16, 18) est prévu dans le deuxième élément de guidage (13, 14) pour l'élément suiveur (9, 10) correspondant, ce logement étant disposé de manière à permettre un pivotement du levier (7) autour de l'élément suiveur (9, 10) en position dans ce logement, au moins une zone d'effort (17, 19) étant prévue sur le premier élément de guidage (13, 14), zone sur laquelle agit son élément suiveur correspondant lorsque l'élément suiveur correspondant au deuxième élément de guidage pénètre dans son logement ou respectivement en sort,
   caractérisé en ce qu'il comprend en outre
   - un deuxième levier supplémentaire (21, 22, 42) relié de manière fixe à chaque cellule filtrante (1), sur ou à proximité de leur axe de basculement,
   - une deuxième butée déplaçable (23, 24, 31), et
   - un élément élastique (29, 30, 36) reliant la deuxième butée (23, 24, 31) à un support stationnaire (25, 26, 32) et agissant sur la deuxième butée dans un deuxième sens (f),
   et en ce que le deuxième levier supplémentaire (21, 22, 42) coopère avec la deuxième butée (23, 24, 31) en agissant sur elle dans des sens toujours approximativement opposés au deuxième sens (f) susdit, pendant que l'élément suiveur (9, 10) correspondant au premier élément de guidage (13, 14) agit sur ladite zone d'effort (17, 19) correspondante.

3. Dispositif suivant la revendication 2, caractérisé en ce que les premier et deuxième leviers supplémentaires (21, 22, 42) sont disposés de part et d'autre par rapport à l'axe de basculement (4).

4. Dispositif suivant l'une des revendications 2 et 3, caractérisé en ce que les premier et deuxième leviers supplémentaires (21, 22, 42) sont réalisés de manière à former ensemble une pièce unique.

5. Dispositif suivant l'une des revendications 2 à 4, caractérisé en ce que le levier (7) est formé d'une bielle qui s'étend de manière sensiblement rectiligne entre ses deux éléments suiveurs (9, 10).

6. Dispositif suivant les revendications 4 et 5, caractérisé en ce que le levier (7) et les leviers supplémentaires (21, 22, 42) sont, dans une vue en projection horizontale, disposés sensiblement en croix autour de l'axe de basculement (4).

7. Dispositif suivant l'une des revendications 2 à 6, caractérisé en ce que le levier (7) et les leviers supplémentaires (21, 22, 42) sont réalisés de manière à former ensemble une pièce unique.

8. Dispositif suivant l'une des revendications 2 à 7, caractérisé en ce que chaque butée (23, 24, 31) est formée d'un galet cylindrique capable de pivoter autour d'un axe (27, 28, 34) parallèle à l'axe de basculement (4).

9. Dispositif suivant la revendication 8, caractérisé en ce que chaque levier supplémentaire (42) présente une surface d'appui courbe (43) pour coopérer avec son galet de butée (31) et en ce que le galet (31) et la surface d'appui (43) sont mutuellement agencés de telle façon que le levier supplémentaire (42) pivote approximativement autour du point de tangeance (44) entre la surface d'appui (43) et le galet (31) pendant leur coopération.

10. Dispositif suivant l'une quelconque des revendications 1 à 9, caractérisé en ce que chaque élément élastique (36) peut être précontraint.

**Claims**

1. A continuous filtration device, comprising :
   - barrel-shaped filter cells (1), each presenting an opening which is placed upwards during filtration and which is covered by a filtering layer (3), these cells being arranged in a carousel around a vertical axis of rotation (2) and each presenting a horizontal axis of tilt (4) which intersects the axis of rotation of the carousel,
   - a lever (7) connected in a fixed way to each filter cell (1), so as to intersect their axis of tilt (4) at a tilting point (8),
   - follower elements (9,10), carried by the lever (7) and placed on it on either side of the tilting point (8),
   - at least one stationary guiding element (13, 14) for each of the follower elements (9, 10) of the lever of a cell, these guiding elements (13, 14) being reciprocally arranged in a carousel area so as to achieve a tilting of each cell (1) inside this area about its axis of tilt (4),
   - at least one housing (16, 18) provided in the first of these guiding elements (13, 14) for the corresponding follower element (9, 10), this housing being placed so as to allow a turning of the lever (7) around the follower element (9, 10) in position in this housing (16, 18),
   - at least one loading area (17, 19) which is provided on a second guiding element (13, 14) and on which its corresponding follower element (9, 10) acts when the follower element corresponding to the first guiding element respectively leaves its housing or enters the latter, and
   means for rotationally driving (5, 6) the filter cells around the aforesaid axis of rotation (2), characterized in that it moreover comprises :
   - a first additional lever (21, 22, 42) connected in a fixed way to each filter cell (1), on or near to their axis of tilt (4),
   - a first mobile stop (23, 24, 31), and
   - an elastic element (29, 30, 36) connecting the first stop (23, 24, 31) to a fixed support (25, 26, 32) and acting on the first stop (23, 24, 31) in a first direction (f),
   and in that the first additional lever (21, 22, 42) cooperates with the first stop (23, 24, 31) by acting on it in directions always approximately opposite to the aforesaid first direction (f), while the follower element (9, 10) corresponding to the second guiding element (13, 14) acts on the aforesaid corresponding loading area (17, 19).

2. A device, according to claim 1, in which at least one housing (16, 18) is provided in the second guiding element (13, 14) for the corresponding follower element (9, 10), this housing being placed so as to allow a turning of the lever (7) around the follower element (9, 10) in position in this housing, at least one loading area (17, 19) being provided on the first guiding element (13, 14), area on which its corresponding follower element acts when the follower element corresponding to the second guiding element respectively enters its housing or leaves it,
characterized in that it moreover comprises :

- a second additional lever (21, 22, 42) connected in a fixed way to each filter cell (1), on or near to their axis of tilt,
- a second mobile stop (23, 24, 31), and
- an elastic element (29, 30, 36) connecting the second stop (23, 24, 31) to a fixed support (25, 26, 32) and acting on the second stop in a second direction (f),
- and in that the second additional lever (21, 22, 42) cooperates with the second stop (23, 24, 31) by acting on it in directions always approximately opposite to the aforesaid second direction (f), while the follower element (9, 10) corresponding to the first guiding element (13, 14) acts on the aforesaid corresponding loading area (17, 19).

3. A device, according to claim 2, characterized in that the first and second additional levers (21, 22, 42) are arranged on both sides with respect to the axis of tilt (4).

4. A device, according to one of the claims 2 and 3, characterized in that the first and second additional levers (21, 22, 42) are made so as to together form a single component.

5. A device, according to one of the claims 2 to 4, characterized in that the lever (7) is comprised of a drive rod which extends more or less straight between its two follower elements (9, 10).

6. A device, according to claims 4 and 5, characterized in that the lever (7) and the additional levers (21, 22, 42) are arranged, in a horizontal projection view, more or less crosswise about the axis of tilt (4).

7. A device, according to claims 4 and 5, characterized in that the lever (7) and the additional levers (21, 22, 42) are made so as to together form a single component

8. A device, according to one of the claims 2 to 7, characterized in that each stop (23, 24, 31) consists of a cylindrical roll capable of turning about an axis (27, 28, 42) parallel to the axis of tilt (4).

9. A device, according to claim 8, characterized in that each additional lever (42) presents a curved bearing surface (43) in order to cooperate with its stop roll (31) and in that the roll (31) and the bearing surface (43) are mutually arranged so that the additional lever (42) pivots approximately about the point of tangency (44) between the bearing surface (43) and the roll (31) during their cooperation.

10. A device, according to any of the claims 1 to 9, characterized in that each elastic element (36) can be prestressed.

**Patentansprüche**

1. Vorrichtung zum kontinuierlichen Filtrieren, die
   - wannenförmige Filterzellen (1), wobei jede eine während des Filtrierens nach oben zeigende Öffnung, die mit einem Filterbett (3) versehen ist, aufweist, wobei diese Zellen kreisförmig um eine vertikale Rotationsachse (2) angeordnet sind und jede eine horizontale Kippachse (4), die die Rotationsachse des Kreises kreuzt, aufweist,
   - einen Hebel (7), der fest mit jeder Filterzelle (1) verbunden ist, derart, daß er ihre Kippachse (4) in einem Kippunkt (8) kreuzt,
   - von dem Hebel (7) getragene und auf diesem beiderseits des Kippunktes (8) angeordnete Folgeelemente,
   - wenigstens ein stationäres Führungselement (13, 14) für jedes der Folgeelemente (9, 10) des Hebels einer Zelle, wobei diese Führungselemente (13, 14) bezüglich einander in einem Bereich des Kreises angeordnet sind, so daß ein Umkippen jeder Zelle (1) in diesem Bereich um ihre Kippachse (4) erreicht wird,
   - wenigstens eine Aufnahme (16, 18), die in einem ersten der Führungselemente (13, 14) für das entsprechende Folgeelement (9, 10) vorgesehen ist, wobei diese Aufnahme so ausgebildet ist, daß ein Schwenken des Hebels (7) um das Folgeelement (9, 10) in Position in diese Aufnahme (16, 18) ermöglicht wird,
   - wenigstens eine Druckzone (17, 19), die auf einem zweiten Führungselement (13, 14) vorgesehen ist und auf die ihr entsprechendes Folgeelement (9, 10) wirkt, wenn das dem ersten Führungselement entsprechende Folgeelement aus seiner Aufnahme kommt bzw. in diese eintritt, und Mittel zum Rotationsantrieb (5, 6) der Filterzellen um die oben genannte Rotationsachse (2),

aufweist, dadurch gekennzeichnet, daß sie außerdem

   - einen ersten zusätzlichen, mit jeder Filterzelle (1) auf oder in Nähe ihrer Kippachse (4) fest verbundenen Hebel (21, 22, 42),

- einen ersten beweglichen Anschlag (23, 24, 31) und
- ein elastisches Element (29, 30, 36), das den ersten Anschlag (23, 24, 31) mit einem stationären Träger (25, 26, 32) verbindet und auf den ersten Anschlag (23, 24, 31) in einer ersten Richtung (f) einwirkt,

aufweist,

und daß der erste zusätzliche Hebel (21, 22, 42) mit dem ersten Anschlag (23, 24, 31) zusammenwirkt, indem er auf diesen in der oben genannten Richtung (f) immer etwa entgegengesetzten Richtungen wirkt, während das dem zweiten Führungselement (13, 14) entsprechende Folgeelement (9, 10) auf die entsprechende Druckzone (17, 19) wirkt.

2. Vorrichtung nach Anspruch 1, bei der wenigstens eine Aufnahme (16, 18) im zweiten Führungselement (13, 14) für das entsprechende Folgeelement (9, 10) vorgesehen ist, wobei die Aufnahme so ausgebildet ist, daß ein Schwenken des Hebels (7) um das Folgeelement (9, 10) in Position in diese Aufnahme ermöglicht wird, wobei wenigstens eine Druckzone (17, 19) auf dem ersten Führungselement (13, 14) vorgesehen ist, auf die ihr entsprechendes Folgeelement wirkt, wenn das dem zweiten Führungselement entsprechende Folgeelement in seine Aufnahme eintritt bzw. aus dieser austritt, dadurch gekennzeichnet, daß sie außerdem

- einen zweiten zusätzlichen, mit jeder Filterzelle (1) auf oder in Nähe ihrer Kippachse fest verbundenen Hebel (21, 22, 42),
- einen zweiten beweglichen Anschlag (23, 24, 31) und
- ein elastisches Element (29, 30, 36), das den zweiten Anschlag (23, 24, 31) mit einem stationären Träger (25, 26, 32) verbindet und auf den zweiten Anschlag in einer zweiten Richtung (f) wirkt,

aufweist,

und daß der zweite zusätzliche Hebel (21, 22, 42) mit dem zweiten Anschlag (23, 24, 31) zusammenwirkt, indem er auf diesen in der oben genannten zweiten Richtung (f) immer etwa entgegengesetzten Richtungen wirkt, während das dem ersten Führungselement (13, 14) entsprechende Folgeelement (9, 10) auf die entsprechende Druckzone (17, 19) wirkt.

3. Vorrichtung nach Anspruch 2, dadurch gekennzeichnet, daß der erste und zweite zusätzliche Hebel (21, 22, 42) beiderseits bezüglich der Kippachse (4) angeordnet sind.

4. Vorrichtung nach einem der Ansprüche 2 und 3, dadurch gekennzeichnet, daß der erste und zweite zusätzliche Hebel (21, 22, 42) so ausgebildet sind, daß sie zusammen ein Teil bilden.

5. Vorrichtung nach einem der Ansprüche 2 bis 4, dadurch gekennzeichnet, daß der Hebel (7) aus einer Stange gebildet ist, die sich etwa geradlinig zwischen ihren beiden Folgeelementen (9, 10) erstreckt.

6. Vorrichtung nach den Ansprüchen 4 und 5, dadurch gekennzeichnet, daß der Hebel (7) und die zusätzlichen Hebel (21, 22, 42), in Sicht eines horizontalen Aufrisses gesehen, etwa kreuzförmig um die Kippachse (4) angeordnet sind.

7. Vorrichtung nach einem der Ansprüche 2 bis 6, dadurch gekennzeichnet, daß der Hebel (7) und die zusätzlichen Hebel (21, 22, 42) so ausgebildet sind, daß sie zusammen ein Teil bilden.

8. Vorrichtung nach einem der Ansprüche 2 bis 7, dadurch gekennzeichnet, daß jeder Anschlag (23, 24, 31) aus einer zylindrischen Rolle gebildet ist, die um eine parallel zur Kippachse (4) liegende Achse (27, 28, 34) schwenkbar ist.

9. Vorrichtung nach Anspruch 8, dadurch gekennzeichnet, daß jeder zusätzliche Hebel (42) eine gekrümmte Stützfläche (43) aufweist, um mit seiner Anschlagsrolle (31) zusammenzuwirken, und daß die Rolle (31) und die Stützfläche (43) gegenseitig so angeordnet sind, daß der zusätzliche Hebel (42) etwa um den Tangentenpunkt (44) zwischen der Stützfläche (43) und der Rolle (31) während ihres Zusammenwirkens schwenkt.

10. Vorrichtung nach einem der Ansprüche 1 bis 9, dadurch gekennzeichnet, daß jedes elastische Element (36) vorgespannt sein kann.

**Fig.1**

**Fig.5**

Fig.2

Fig.3

EP 0 539 554 B1

*Fig.4a*

*Fig.4b*